(19) Europäisches Patentamt

European Patent Office

Office européen des brevets

(11) **EP 0 784 262 B1**

(12) **FASCICULE DE BREVET EUROPEEN**

(45) Date de publication et mention
de la délivrance du brevet:
**08.07.1998 Bulletin 1998/28**

(51) Int Cl.6: **G06F 7/72**

(21) Numéro de dépôt: **96470026.4**

(22) Date de dépôt: **18.12.1996**

(54) **Dispositif et procédé améliorant la vitesse de traitement d'un coprocesseur d'arithmétique modulaire**

Einrichtung und Verfahren zur Verbesserung der Verarbeitungsgeschwindigkeit eines Koprozessors für moduläre Arithmetik

Device and method for improving the processing speed of a modular arithmetic coprocessor

(84) Etats contractants désignés:
**DE FR GB IT**

(30) Priorité: **15.01.1996 FR 9600510**

(43) Date de publication de la demande:
**16.07.1997 Bulletin 1997/29**

(73) Titulaire: **SGS-THOMSON MICROELECTRONICS S.A.**
**94250 Gentilly (FR)**

(72) Inventeur: **Monier, Guy**
**57000 Metz (FR)**

(74) Mandataire: **Schmit, Christian Norbert Marie**
**Cabinet Ballot-Schmit,**
**18 Place du Forum**
**57000 Metz (FR)**

(56) Documents cités:
**EP-A- 0 601 907**

## Description

L'invention concerne un dispositif améliorant la vitesse de traitement d'un coprocesseur d'arithmétique modulaire intervenant dans la mise en oeuvre d'opérations modulaires selon la méthode de Montgomery. Les opérations modulaires selon la méthode de Montgomery permettent d'effectuer des calculs modulaires dans un corps fini $GF(2^n)$ (corps de Gallois de $2^n$ éléments) sans effectuer de division.

Classiquement, les opérations modulaires sur $GF(2^n)$ sont utilisées en cryptographie pour des applications telles que l'authentification de messages, l'identification d'un utilisateur et l'échange de clés. De tels exemples d'applications sont décrits par exemple dans la demande de brevet français publiée sous le numéro 2 679 054.

On trouve dans le commerce des circuits intégrés dédiés à de telles applications, par exemple le produit fabriqué par SGS-THOMSON MICROELECTRONICS S.A. et référencé ST16CF54, bâti autour d'une association de type unité centrale - coprocesseur arithmétique, et dédié à la mise en oeuvre de calculs modulaires. Le coprocesseur utilisé permet de traiter des multiplications modulaires, en utilisant la méthode de Montgomery. Il fait l'objet d'une demande de brevet européen, publiée sous la référence 0 601 907 A3, et est illustré figure 1 (cette figure correspondant à la figure 2 de la demande de brevet européen citée).

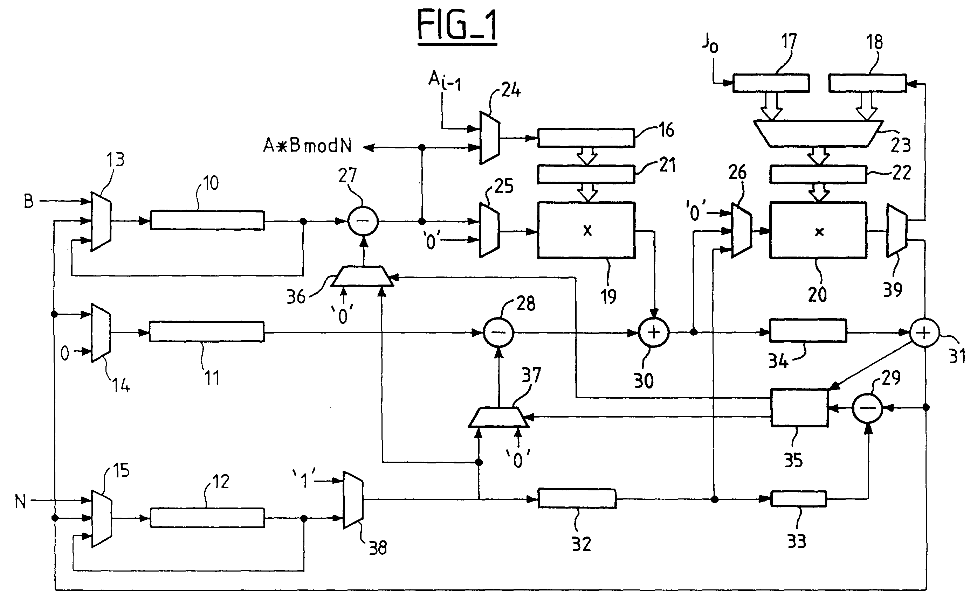

Ce circuit illustré figure 1 permet donc de calculer une opération $P_{field}(A,B)_N$. Cette opération $P_{field}(A,B)_N$ revient à effectuer le calcul $(A * B * I)$ mod $N$ où $I$ est une erreur que l'on sait compenser. De manière courante, on a A, B et N qui sont codé sur 256, 512 et bientôt 1024 bits. L'opération $P_{field}$ utilise entre autre des circuits de multiplication, pour diminuer la taille de ces circuits de multiplication, on utilise une base de travail qui permet d'effectuer certains calculs sur des mots de Bt bits. Classiquement on a Bt égal à 32 bits.

L'utilisation d'un circuit tel que celui de la figure 1 pour réaliser une opération $P_{field}(A,B)_N$ où A, B et N sont codés sur $m * Bt$ bits, N est impair, A est découpé en m mots $A_i$ de Bt bits. revient à effectuer les étapes suivantes:

E1: initialisation du circuit:

- calcul de manière logicielle d'un paramètre $J_0$ défini par $((N * J_0) + 1)$ mod $2^{Bt} = 0$,
- chargement de $J_0$ dans un premier registre 17 de Bt bits,
- chargement de B dans un deuxième registre 10 de m*Bt bits,
- chargement de N dans un troisième registre 12 de m*Bt bits,
- chargement de $A_0$ dans un quatrième registre 16 de Bt bits,
- chargement de 0 dans un cinquième registre 11 de m*Bt bits,
- initialisation d'un premier et d'un deuxième circuit de multiplication 19 et 20,
- initialisation d'un premier, d'un deuxième et d'un troisième circuit de soustraction 27, 28 et 29,
- initialisation d'un premier et d'un deuxième circuit d'addition 30 et 31,

E2: première itération:

- chargement dans un sixième registre 21 du contenu du quatrième registre 16,
- réalisations de différentes opérations élémentaires afin d'effectuer les calculs suivants:

$$X = A_0 * B,$$

$$Y_0 = (X * J_0) \bmod 2^{Bt},$$

$$Z = X + (N * Y_0)$$

$$S = Z \setminus 2^{Bt},$$

$\setminus$ étant une division entière,

si S est supérieur à N alors on soustrait N à S à la prochaine itération,
On charge S dans le cinquième registre 11,
E3: itérations suivante, i varie de 1 à m-1

- chargement de $A_i$ dans un quatrième registre 16,
- chargement dans un sixième registre 21 du contenu du quatrième registre 16,
- réalisations de différentes opérations élémentaires afin d'effectuer les calculs suivants:

$$X = S + A_i * B,$$

$$Y_0 = (X * J_0) \bmod 2^{Bt},$$

$$Z = X + (N * Y_0)$$

$$S = Z \setminus 2^{Bt},$$

$\setminus$ étant une division entière,

si S est supérieur à N alors on soustrait N à S à la prochaine itération,
On charge S dans le cinquième registre 11,

E4: dernière itération, on soustrait à S soit 0 soit N à l'aide du circuit de soustraction 28, puis on charge cette valeur de S dans le deuxième registre 10,

E5: on sort le contenu du deuxième registre par l'intermédiaire d'une borne de sortie.

Pour plus de détails sur le déroulement d'un tel procédé, on peut se référer à la demande de brevet EP-A-0 601 907 et plus particulièrement aux passages page 4 ligne 41 à page 6 ligne 17 et page 19 lignes 7 à 49.

Un tel procédé utilise un certain nombre de cycles d'horloge interne et d'horloge de chargement. On s'intéressera particulièrement au nombre de cycles d'une itération par exemple de l'étape E3:

- le chargement de $A_i$ dans un quatrième registre 16 utilise Bt cycles d'horloge de chargement,
- le chargement dans le sixième registre 21 du contenu du quatrième registre 16 utilise 1 cycle interne,
- la réalisation des différentes opérations élémentaires, qui effectuent les différents calculs de l'itération, ne nécessite pas d'attendre le résultat d'un calcul pour commencer le calcul suivant et utilise $(m + 2) * Bt + x$ cycles d'horloge interne, x étant un nombre qui correspond à des itérations de synchronisation et d'initialisation, x sera négligé dans la suite du document.

En pratique, il est possible d'effectuer le chargement de $A_i$ pendant la réalisation des calculs d'une itération, dès que l'on a chargé le contenu du quatrième registre 16 dans le sixième registre 21. Il n'y a aucun problème si l'horloge de chargement est la même que l'horloge interne.

Or l'horloge de chargement dépend d'éléments externes variés, par exemple un bus de communication qui amène des données, le système unité centrale-coprocesseur aura donc des contraintes sur le cadencement de l'horloge de chargement qui peut être en pratique, par exemple, à une fréquence de 2 MHz. Un circuit intégré par contre peut autoriser un temps de cycle de l'ordre de 10 ns, ce qui correspond à une fréquence de 100 MHz en interne. Le fait d'effectuer le chargement de $A_i$ pendant l'exécution d'une itération permet un temps de cycle de chargement $m + 2$ fois plus grand qu'un temps de cycle interne, pour ne pas ralentir le processus. Autrement dit cela permet d'avoir une fréquence de traitement en interne au plus égale à $m + 2$ fois la fréquence de chargement sans que le chargement ralentisse le traitement.

Dans la pratique, on utilise une base de travail de 32 bits avec des mots de 256 ou 512 bits, ce qui correspond à $m = 8$ ou 16. Dans le pire cas, cela permet d'avoir une fréquence interne de traitement seulement 10 fois supérieure à la fréquence de chargement, sans être influencé par le temps de chargement.

L'invention a pour but de rendre la fréquence interne de traitement indépendante de la fréquence de chargement. Pour réaliser cela, un registre supplémentaire de m * Bt bits est ajouté afin que A soit chargé en une seule fois, en même temps que B et N.

L'invention a donc pour objet un dispositif en circuit intégré permettant le calcul de multiplication de A par B, notamment de type $P_{field}(A, B)_N$ définie dans la méthode de Montgomery, utilisant un découpage en mots de Bt bits pour effectuer les différents calculs, comportant:

- un premier registre de Bt bits, pour contenir Bt bits de A, ayant une entrée série et une sortie parallèle,
- un deuxième, un troisième et un quatrième registre à décalage de m * Bt bits, m étant un entier supérieur à 1, ayant une entrée série et une sortie série, ces registres contenant B, N, et le résultat, respectivement,
- des moyens de calcul couplés à ces quatre registres permettant ledit calcul Pfield $(A, B)_N$

caractérisé en ce que l'on ajoute un cinquième registre à décalage de m * Bt bits, pour contenir m * Bt bits de A, une entrée série de ce cinquième registre étant reliée à une borne d'entrée dudit dispositif et une sortie série de ce cinquième registre étant reliée à l'entrée du premier registre, ledit cinquième registre étant chargé en une seule fois.

Le cinquième registre ajouté permet de stocker la donnée A dans son intégralité lors du chargement des autres données de taille identique et de se substituer au chargement externe des différentes portions de Bt bits de A.

Avantageusement, on utilise un registre supplémentaire de taille variable pour apporter plus de souplesse dans l'utilisation.

L'invention a également pour objet un procédé de mise en oeuvre d'une opération modulaire $P_{field}(A,B)_N$ selon la méthode de Montgomery caractérisé en ce que le procédé comporte les étapes suivantes:

E1: calcul d'un paramètre $J_0$ codé sur Bt bits, avec $J_0 = - N_0^{-1} \mod 2^{Bt}$, $N_0$ étant un mot de poids le plus faible d'un modulo N, et chargement de $J_0$ dans un premier registre de Bt bits,

E2: chargement d'un multiplicande A, d'un multiplieur B et d'un modulo N dans des registres respectifs de n bits, avec $n = m * Bt$, et initialisation d'un autre registre de n bits à zéro, le contenu de ce registre étant noté S, avec S donnée variable binaire codée sur n bits,

E3: mise en oeuvre d'une boucle, indexée par un indice i, avec i variant de 1 à m, chaque $i^{ième}$ itération comprenant les opérations suivantes :

a) décalage vers la droite de Bt bits du registre contenant A, chargement de ces Bt bits correspondant à un mot $A_i$ de A dans un deuxième registre de Bt bits,

b) transfert du $i^{ième}$ mot $A_{i-1}$ du multiplicande A du deuxième registre vers un registre de mémorisation,

c) production d'une valeur $X(i) = S(i-1) + B * A_{i-1}$ avec $S(0) = 0$ et $S(i-1)$ la valeur dite actualisée de S,

d) production d'une valeur $Y_0(i) = X_0(i) * J_0 \bmod 2^{Bt}$,

e) calcul d'une valeur $Z(i) = X(i) + Y_0(i) * N$,

f) ne pas prendre en compte le mot le moins significatif de $Z(i)$ et stocker les mots restants, c'est à dire $Z(i)/2^{Bt}$, dans le registre contenant S,

g) comparer $Z(i)/2^{Bt}$ à N, bit à bit, dans le but de déterminer la valeur actualisée $S(i)$ de l'itération suivante, de la manière décrite ci-dessus, cette comparaison se faisant en soustrayant bit à bit $Z(i)/2^{Bt}$ et N dans un circuit de soustraction série, N ayant été retardé de Bt cycles supplémentaires,

E4: à la $m^{ième}$ itération, ignorer le mot le moins significatif de $Z(m)$ et entrer les mots restants, c'est à dire $Z(m)/2^{Bt}$, dans le registre contenant B,

E5: sortie du résultat stocké dans le registre contenant B à la dernière itération, en soustrayant éventuellement N si nécessaire.

Un tel procédé permet de gérer au mieux le fait d'avoir un registre contenant la valeur A dans sa totalité. Suivant la même idée, l'invention propose également un procédé d'exponentiation utilisant plusieurs opération $P_{field}$ et permettant un calcul faisant très peu de chargement de données depuis l'extérieur du circuit, améliorant ainsi la vitesse de traitement.

L'invention sera mieux comprise, et d'autres particularités et avantages apparaîtront dans la description non limitative qui va suivre, en se référant aux dessins annexés, dans lesquels:

- la figure 1 représente un coprocesseur arithmétique de l'art antérieur,
- la figure 2 représente ce même coprocesseur après avoir été modifié selon l'invention,
- la figure 3 représente un mode préféré de réalisation du registre supplémentaire ayant une taille variable.

La figure 1 représente un coprocesseur d'arithmétique modulaire selon l'art antérieur. Ce coprocesseur sert notamment à réaliser l'opération élémentaire dite $P_{field}$ qui est défini par la méthode de Montgomery. Ce coprocesseur comprend les éléments suivants:

- trois registres à décalage 10, 11, et 12, de m * Bt bits, ayant une entrée et une sortie série, destinés à recevoir respectivement le multiplieur B, le résultat S, et le modulo N,

- un multiplexeur 13 à trois entrées série dont une sortie série est reliée à l'entrée du registre 10, une première entrée étant reliée à une première borne d'entrée, une deuxième entrée étant reliée à la sortie du registre 10,

- un multiplexeur 14 à deux entrées série dont une sortie série est reliée à l'entrée du registre 11, une première entrée est reliée à un zéro logique,

- un multiplexeur 15 à trois entrées série dont une sortie série est reliée à l'entrée du registre 12, une première entrée étant reliée à une deuxième borne d'entrée, une deuxième entrée étant reliée à la sortie du registre 12,

- trois registres à décalage 16, 17, et 18, de Bt bits, ayant une entrée série et une sortie parallèle, destinés à recevoir respectivement Bt bits du multiplicande A, un paramètre de calcul noté $J_0$, un résultat intermédiaire noté $Y_0$, l'entrée du registre 17 étant reliée à une troisième borne d'entrée,

- deux circuits de multiplication 19 et 20 ayant chacun une entrée série, une entrée parallèle de Bt bits et une sortie série,

- deux registres 21 et 22 de Bt bits ayant une entrée et une sortie parallèle, l'entrée du registre 21 étant relié à la sortie du registre 16, la sortie du registre 21 étant reliée à l'entrée du circuit de multiplication 19, la sortie du registre 22 étant reliée à l'entrée du circuit de multiplication 20,

- un multiplexeur 23 à deux entrées parallèles et une sortie parallèle, une première entrée du multiplexeur 23 étant reliée à la sortie du registre 17, une deuxième entrée du multiplexeur 23 étant reliée à la sortie du registre 18, la sortie du multiplexeur 23 étant reliée à l'entrée du registre 22,

- deux multiplexeurs 24, 25, ayant chacun deux entrées séries et une sortie série, la sortie du multiplexeur 24 étant reliée à l'entrée du registre 16, une première entrée du multiplexeur 24 étant reliée à une quatrième borne d'entrée, la sortie du multiplexeur 25 étant reliée à l'entrée série du circuit de multiplication 19, une première entrée du multiplexeur 25 étant reliée à un zéro logique,

- un multiplexeur 26 comportant trois entrées série et une sortie, la sortie étant reliée à l'entrée série du circuit de multiplication 20, une première entrée étant reliée à un zéro logique,

- trois circuits de soustraction 27, 28, et 29 comportant chacun deux entrées séries et une sortie série, la première entrée du circuit 27 étant reliée à la sortie du registre 10, la sortie du circuit 27 étant reliée à chacune des deuxièmes entrées des multiplexeurs 24 et 25 et également à une borne de sortie, la première entrée du circuit 28 étant reliée à la sortie du registre 11,

- deux circuits d'addition 30 et 31, ayant chacun deux entrée séries et une sortie série, la première entrée du circuit 30 étant reliée à la sortie du circuit 28, la deuxième entrée du circuit 30 étant reliée à la sortie du circuit 19, la sortie du circuit 30 étant reliée à une deuxième entrée du multiplexeur 26, la sortie du circuit étant reliée à une première entrée du circuit 29 mais aussi à une deuxième entrée du multiplexeur 14 et également à chacune des troisièmes entrées des multiplexeurs 13 et 15,

- trois cellules à retard 32, 33 et 34 qui sont en fait des registres à décalage de Bt bits, ayant une entrée et une sortie série, la sortie de la cellule 32 étant reliée d'une part à une troisième entrée du multiplexeur 26 et d'autre part à l'entrée de la cellule 33, la sortie de la cellule 33 étant reliée à une deuxième entrée du circuit 29, l'entrée de la cellule 34 étant reliée à la sortie du circuit 30, la sortie de la cellule 34 étant reliée à une première entrée du circuit 31,

- un circuit de comparaison 35 ayant deux entrées série et deux sorties, une première entrée étant reliée à la sortie du circuit 31, une deuxième entrée étant reliée à la sortie du circuit 29,

- deux multiplexeurs 36 et 37, chacun ayant deux entrées séries, une entrée de sélection, une sortie, chacune des premières entrées séries étant reliée à un zéro logique, chacune des entrées de sélection étant reliée à l'une des sorties du circuit 35, la sortie du multiplexeur 36 étant reliée à une deuxième entrée du circuit 27, la sortie du multiplexeur 37 étant reliée à une deuxième entrée du circuit 28,

- un multiplexeur 38 ayant deux entrées et une sortie, une première entrée étant reliée à un "un" logique, une deuxième entrée étant reliée à la sortie du registre 12, la sortie étant reliée d'une part à l'entrée de la cellule 32 et d'autre part aux deuxièmes entrées des multiplexeurs 36 et 37,

- un démultiplexeur 39 ayant une entrée et deux sorties, l'entrée étant reliée à la sortie du circuit 20, une première sortie étant reliée à l'entrée du registre 18, une deuxième sortie étant reliée à une deuxième entrée du circuit 31.

Pour plus de détails sur la réalisation de certains éléments on peut se référer à la demande de brevet EP-A-0 601 907.

Avec un tel circuit ou l'une de ses proches variantes, la réalisation d'une opération $P_{field}(A,B)_N$, peut se dérouler de différentes façons. Dans tous les cas, on a la structure suivante, le multiplicande A étant découpé en m mots de Bt bit $A_0$ à $A_{m-1}$:

E1: calcul externe d'un paramètre $J_0$ codé sur Bt bits, avec $J_0 = - N_0^{-1} \bmod 2^{Bt}$, $N_0$ étant le mot de poids le plus faible du modulo N, et chargement de $J_0$ dans le registre 17 de Bt bits,
E2: chargement du multiplieur B et du modulo N dans les registres respectifs 10 et 12 de n bits, avec $n = m * Bt$, et initialisation du registre 11 de n bits à zéro, le contenu de ce registre étant noté S, avec S une donnée variable binaire codée sur n bits,
E3: mise en oeuvre d'une boucle, indexée par un indice i, avec i variant de 1 à m, chaque $i^{\text{ème}}$ itération comprenant les opérations suivantes :

a) chargement du mot $A_{i-1}$ dans le registre 16
b) transfert du $i^{\text{ème}}$ mot $A_{i-1}$ du multiplicande A d'un registre 16 vers un registre de mémorisation 21,
c) production d'une valeur $X(i) = S(i-1) + B * A_{i-1}$ avec $S(0) = 0$ et $S(i-1)$ la valeur dite actualisée de S,
d) production d'une valeur $Y_0(i) = X_0(i) * J_0 \bmod 2^{Bt}$,
e) calcul d'une valeur $Z(i) = X(i) + Y_0(i) * N$,
f) ne pas prendre en compte le mot le moins significatif de Z(i) et stocker les mots restants, c'est à dire $Z(i)/2^{Bt}$, dans le registre 11,
g) comparer $Z(i)/2^{Bt}$ à N, bit à bit, dans le but de déterminer la valeur actualisée S(i) de l'itération suivante, de la manière décrite ci-dessus, cette comparaison se faisant en soustrayant bit à bit $Z(i)/2^{Bt}$ et N dans un deuxième circuit de soustraction série 29, N ayant été retardé de Bt cycles supplémentaires,

E4: à la $m^{\text{ème}}$ itération, ignorer le mot le moins significatif de Z(m) et entrer les mots restants, c'est à dire $Z(m)/2^{Bt}$, dans le registre 10,
E5: sortie du résultat stocké dans le registre 10 à la dernière itération, éventuellement soustrait de N si nécessaire.

A titre d'exemple, on peut utiliser l'étape E3 suivante qui fonctionne sur le circuit de la figure 1:
E3: mise en oeuvre d'une boucle, indexée par un indice i, avec i variant de 1 à m, chaque $i^{\text{ème}}$ itération comprenant les opérations suivantes :

a) chargement du mot $A_{i-1}$ dans le registre 16
b) transfert du $i^{\text{ème}}$ mot $A_{i-1}$ du multiplicande A d'un registre 16 vers un registre de mémorisation 21,
c) production d'une valeur $X(i) = S(i-1) + B * A_{i-1}$ avec $S(0) = 0$ et $S(i-1)$ la valeur dite actualisée de S, définie ci-après, en :

I - décalant à droite le contenu du registre 10 vers l'entrée d'un premier circuit de multiplication 19 série-parallèle, avec rebouclage de la sortie du registre 10 sur son entrée,
II - multipliant les bits de B par $A_{i-1}$,
III - décalant à droite le contenu du registre 12, avec rebouclage de la sortie sur l'entrée,
IV - déterminant la valeur actualisée de S(i-1) comme étant la valeur stockée dans le registre 11 après la $(i-1)^{\text{ème}}$ itération, si celle ci est inférieure à N, et si elle est plus grande, en soustrayant en série N de celle-ci dans un premier circuit de soustraction série 28, la valeur en résultant étant la valeur actualisée de S(i-1), et

V - décalant à droite le contenu du registre 11 et additionnant bit à bit la valeur de la multiplication $B * A_{i-1}$ avec la valeur actualisée de $S(i-1)$ dans un premier circuit d'addition série 30;

d) production d'une valeur $Y_0(i) = X_0(i) * J_0 \bmod 2^{Bt}$ en multipliant le mot le moins significatif de $X(i)$, $X_0(i)$, par $J_0$, dans un deuxième circuit de multiplication 20 série-parallèle, et entrée de la valeur $X_0(i) * J_0 \bmod 2^{Bt} = Y_0(i)$ dans un registre 18, et simultanément retarder N et $X(i)$ de Bt cycles dans les cellules à retard 32 et 34;

e) calcul d'une valeur $Z(i) = X(i) + Y_0(i) * N$, en:

I - multipliant $Y_0(i)$ par N, retardé de Bt cycles, dans le deuxième circuit de multiplication 20, et
II - additionnant $X(i)$ à la valeur $Y_0(i) * N$ dans un second circuit d'addition série 31

f) ne pas prendre en compte le mot le moins significatif de $Z(i)$ et stocker les mots restants, c'est à dire $Z(i)/2^{Bt}$, dans le registre 11,

g) comparer $Z(i)/2^{Bt}$ à N, bit à bit, dans le but de déterminer la valeur actualisée $S(i)$ de l'itération suivante, de la manière décrite ci-dessus, cette comparaison se faisant en soustrayant bit à bit $Z(i)/2^{Bt}$ et N dans un deuxième circuit de soustraction série 29, N ayant été retardé de Bt cycles supplémentaires,

L'homme du métier n'a aucune difficulté pour comprendre que l'étape a) qui consiste à charger le mot $A_{i-1}$ dans le registre 16 peut s'effectuer pendant le déroulement du reste de l'étape E3 afin de ne pas attendre le chargement.

Cependant on a vu précédemment que le déroulement d'une boucle sans compter le chargement utilise $(m + 2) * Bt$ cycles d'horloge et que le chargement utilise Bt cycles d'horloge de chargement. Dans le cas où on utilise une horloge de séquencement interne beaucoup plus rapide que l'horloge de chargement, il est toujours possible d'avoir à attendre la fin du chargement de chaque mot de A.

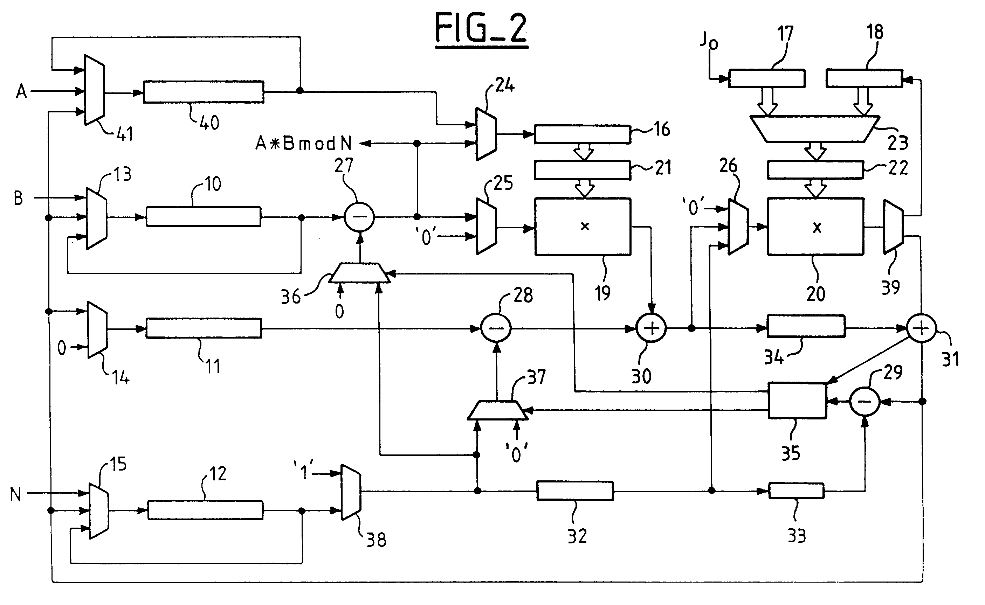

L'invention propose donc sur la figure 2 de rajouter un registre 40 à décalage de $m * Bt$ bits, ayant une entrée et une sortie série, la sortie de ce registre 40 étant reliée à la première entrée du multiplexeur 24 à la place de la quatrième borne d'entrée. Ce registre 40 servant à stoker le multiplicande A dans son intégralité, il n'est plus nécessaire d'effectuer un chargement au cours de chaque itération. En effet, on chargera de préférence simultanément toutes les données nécessaires au calcul de l'opération $P_{field}$. Pour pouvoir conserver A, il est préférable de boucler la sortie sur l'entrée de ce registre 40. Pour cela l'invention prévoit un multiplexeur 41 à trois entrées, et une sortie, la sortie étant reliée à l'entrée du registre 40, la première entrée étant reliée à la sortie du registre 40, la deuxième entré étant reliée à la quatrième borne d'entrée, et la troisième borne d'entrée est reliée à la sortie du circuit 31.

Avec un tel circuit, une opération $P_{field}(A,B)_N$, se déroule de la manière suivante, le multiplicande A étant découpé en m mots de Bt bit $A_0$ à $A_{m-1}$:

E1: calcul externe d'un paramètre $J_0$ codé sur Bt bits, avec $J_0 = - N_0^{-1} \bmod 2^{Bt}$, $N_0$ étant le mot de poids le plus faible du modulo N, et chargement de $J_0$ dans le registre 17 de Bt bits,
E2: chargement du multiplicande A, du multiplieur B et du modulo N dans les registres respectifs 40, 10 et 12 de n bits, avec $n = m * Bt$, , et initialisation du registre 11 de n bits à zéro, le contenu de ce registre étant noté S, avec S une donnée variable binaire codée sur n bits,
E3: mise en oeuvre d'une boucle, indexée par un indice i, avec i variant de 1 à m, chaque $i^{ème}$ itération comprenant les opérations suivantes :

a) décalage vers la droite de Bt bits du registre 40, chargement de ces Bt bits correspondant à un mot $A_i$ de A dans le registre 16,
b) transfert du $i^{ème}$ mot $A_{i-1}$ du multiplicande A d'un registre 16 vers un registre de mémorisation 21,
c) production d'une valeur $X(i) = S(i-1) + B * A_{i-1}$ avec $S(0) = 0$ et $S(i-1)$ la valeur dite actualisée de S,
d) production d'une valeur $Y_0(i) = X_0(i) * J_0 \bmod 2^{Bt}$,
e) calcul d'une valeur $Z(i) = X(i) + Y_0(i) * N$,
f) ne pas prendre en compte le mot le moins significatif de $Z(i)$ et stocker les mots restants, c'est à dire $Z(i)/2^{Bt}$, dans le registre 11,
g) comparer $Z(i)/2^{Bt}$ à N, bit à bit, dans le but de déterminer la valeur actualisée $S(i)$ de l'itération suivante, de la manière décrite ci-dessus, cette comparaison se faisant en soustrayant bit à bit $Z(i)/2^{Bt}$ et N dans un deuxième circuit de soustraction série 29, N ayant été retardé de Bt cycles supplémentaires,

E4: à la $m^{ème}$ itération, ignorer le mot le moins significatif de $Z(m)$ et entrer les mots restants, c'est à dire $Z(m)/2^{Bt}$, dans le registre 10,
E5: sortie du résultat stocké dans le registre 10 à la dernière itération, éventuellement soustrait de N si nécessaire.

Bien entendu, l'étape a) peut être réalisée pendant le reste de l'étape E3 (sauf la première fois). Préférentiellement, cette étape E3 a) est réaliser par un décalage de $m * Bt$ bits du registre 40 contenant A, et un chargement de Bt bits correspondant à un mot $A_i$ de A dans le registre 16 de Bt bits pendant ledit décalage de $m * Bt$ bits.

Un autre avantage d'un tel dispositif est qu'il est possible de réaliser une exponentiation modulaire $A^C$ mod N, C étant codé sur c bits et C ayant son bit de poids fort égal à 1, en n'effectuant qu'une seule opération de chargement de données. En effet, une exponentiation modulaire se déroule ainsi:

- réalisation de l'étape E1,
- calcul d'un paramètre de correction d'erreur H = $2^{2*m*Bt}$ mod N ,
- réalisation de l'étape E2 en prenant le paramètre de correction H comme valeur pour le multiplieur B,
- réalisation des étapes E3 et E4 avec chargement simultanément du résultat dans les premier et deuxième registres (10 et 40), résultat noté A' qui est égal à (A * $2^{m*Bt}$) mod N ,
- réalisation d'une boucle indexée par un indice J, J variant de c-2 à 0:

> B1: réalisation d'une étape E3 en utilisant le contenu du deuxième registre (10) à la place du premier registre (40), cette étape s'effectuant en chargeant, avant la première itération, les Bt premiers bits du deuxième registre (10) dans le cinquième registre (16) en effectuant un décalage de m * Bt bits de ce deuxième registre (10), la sortie de ce deuxième registre (10) étant bouclée sur son entrée, et pendant les itérations suivantes, en chargeant les Bt bits suivant de H dans le cinquième registre (16) au cours de l'itération, le résultat étant stocké dans le deuxième registre (10),
> B2: si le bit de C de poids $2^J$ est égal à un, alors on effectue l'étape E3, A' étant déjà présent dans le premier registre (40), et B étant déjà présent dans le deuxième registre (10), réalisation d'une étape E4,

- chargement d'une donnée ayant pour valeur "1", codée sur m * Bt bits, dans le premier registre (40),
- réalisation d'une étape E3, "1" étant dans le premier registre (40), et B étant dans le deuxième registre (10), réalisation d'une étape E4,
- réalisation d'une étape E5.

Avec le dispositif de l'invention, l'unité centrale travaillant en collaboration avec le coprocesseur n'a plus à s'occuper des chargements de données dans le coprocesseur et peut donc ne s'occuper que des instructions à envoyer au coprocesseur dans le cas d'une exponentiation modulaire.

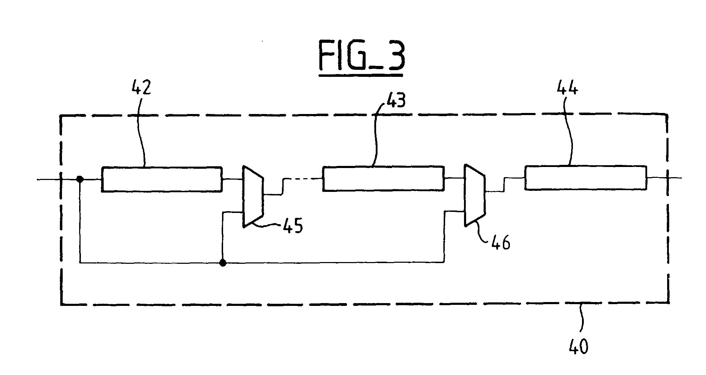

De manière classique, on a m = 8 ou 16, il est donc préférable d'avoir un registre de taille variable pour cette première raison. Une autre raison qui force à utiliser des registres de taille variable est le fait de pouvoir effectuer des calculs uniquement sur la base de travail Bt. L'invention propose donc d'utiliser un registre de taille variable. L'invention propose à titre d'exemple le registre 40 comme représenté sur la figure 3. Ce registre 40 comprend:

- un premier sous-registre à décalage 42 de k * Bt bits, ayant une entrée et une sortie série, l'entrée de ce registre 42 étant confondue avec l'entrée du registre 40,
- un deuxième sous-registre à décalage 43 de (k-1) * Bt bits, ayant une entrée et une sortie série,
- un deuxième sous-registre à décalage 44 de Bt bits, ayant une entrée et une sortie série, la sortie de ce registre 44 étant confondue avec la sortie du registre 40,
- deux multiplexeurs 45 et 46, ayant deux entrées et une sortie, la première entrée de chacun des multiplexeurs 45 et 46 étant reliée à l'entrée du registre 40, la deuxième entrée du multiplexeur 45 étant reliée à la sortie du premier sous-registre 42, la deuxième entrée du multiplexeur 46 étant reliée à la sortie du deuxième sous-registre 43, la sortie du multiplexeur 45 étant reliée à l'entrée du deuxième sous-registre 43, la sortie du multiplexeur 46 étant reliée à l'entrée du troisième sous-registre 44.

Dans notre exemple, on a k = 8 et Bt = 32, ce qui nous permet d'utiliser le registre 40 comme un registre de taille 32, 256 ou 512 bits. L'homme du métier n'aura aucun problème à étendre la modularité d'un tel registre à un nombre quelconque de sous-registres de tailles diverses en ayant une préférence pour des tailles en puissance de 2.

**Revendications**

1. Dispositif en circuit intégré permettant le calcul d'opérations modulaires de type $P_{field}(A, B)_N$ définie dans la méthode de Montgomery, utilisant un découpage en mots de Bt bits pour effectuer les différents calculs, comportant:

   - un premier registre de Bt bits (16), pour contenir Bt bits de A, ayant une entrée série et une sortie parallèle,
   - un deuxième (10), un troisième (12) et un quatrième (11) registre à décalage de m * Bt bits, m étant un entier supérieur à 1, ayant une entrée série et une sortie série, ces registres (10 à 12) contenant B, N, et le résultat, respectivement,
   - des moyens de calcul (19, 20, 28, 30, 31) couplés à ces quatre registres permettant ledit calcul Pfield $(A,B)_N$

   caractérisé en ce que l'on ajoute un cinquième registre (40) à décalage de m * Bt bits, pour contenir m * Bt bits de A, une entrée série de ce cinquième registre (40) étant reliée à une borne d'entrée et une sortie série de ce cinquième registre (40) dudit dispositif étant reliée à l'entrée du premier registre (16), ledit cinquième registre étant chargé en une seule fois.

2. Dispositif selon la revendication 1 caractérisé en ce que le cinquième registre (40) est de taille variable multiple de Bt.

3. Dispositif selon la revendication 2 caractérisé en ce que le cinquième registre (40) comporte n sous-registres (42, 43, 44) et n-1 multiplexeurs (45, 46) à deux entrées.

4. Dispositif selon la revendication 3 caractérisé en ce que l'entrée d'un premier sous-registre (42) est l'entrée du cinquième registre (40), la sortie d'un dernier sous-registre (44) étant la sortie du cinquième registre (40), une première entrée de multiplexeur (45, 46) à deux entrées étant reliée à la sortie d'un des sous-registres (42, 43) qui n'est pas le dernier, une sortie de multiplexeur (45, 46) à deux entrées étant reliée à l'entrée d'un des sous-registre (43, 44) qui n'est pas le premier, et toutes les deuxièmes entrées des multiplexeurs (45, 46) à deux entrées étant reliées à l'entrées du cinquième registre (40).

5. Dispositif selon l'une des revendications 1 à 4 caractérisé en ce que l'entrée du cinquième registre (40) est reliée à la sortie d'un multiplexeur à trois entrées (41).

6. Dispositif selon la revendication 5 caractérisé en ce que une première entrée du multiplexeur à trois entrées (41) est reliée à la sortie du cinquième registre (40), une deuxième entrée du multiplexeur à trois entrées (41) étant reliée à une borne d'entrée du dispositif, une troisième entrée permettant de recevoir des données de la part du reste du dispositif (31).

7. Procédé de mise en oeuvre d'une opération modulaire $P_{field}(A,B)_N$ selon la méthode de Montgomery caractérisé en ce que le procédé comporte les étapes suivantes:

   E1: calcul d'un paramètre $J_0$ codé sur Bt bits, avec $J_0 = - N_0^{-1} \bmod 2^{Bt}$, $N_0$ étant un mot de poids le plus faible d'un modulo N, et chargement de $J_0$ dans un registre de calcul(17) de Bt bits,
   E2: chargement d'un multiplicande A, d'un multiplieur B et d'un modulo N dans un cinquième, un deuxième et un troisième registres respectifs (40, 10, 12) de n bits, avec n = m * Bt, et initialisation d'un quatrième registre (11) de n bits à zéro, le contenu de ce registre étant noté S, avec S donnée variable binaire codée sur n bits,

E3: mise en oeuvre d'une boucle, indexée par un indice i, avec i variant de 1 à m, chaque $i^{ème}$ itération comprenant les opérations suivantes :

   a) décalage vers la droite de Bt bits du cinquième registre (40) contenant A, chargement de ces Bt bits correspondant à un mot $A_i$ de A dans un premier registre (16) de Bt bits,
   b) transfert du $i^{ème}$ mot $A_{i-1}$ du multiplicande A du premier registre (16) vers un registre de mémorisation (21),
   c) production d'une valeur $X(i) = S(i-1) + B * A_{i-1}$ avec $S(0) = 0$ et $S(i-1)$ la valeur dite actualisée de S,
   d) production d'une valeur $Y_0(i) = X_0(i) * J_0 \bmod 2^{Bt}$,
   e) calcul d'une valeur $Z(i) = X(i) + Y_0(i) * N$,
   f) ne pas prendre en compte le mot le moins significatif de Z(i) et stocker les mots restants, c'est à dire $Z(i)/2^{Bt}$, dans le quatrième registre (11) contenant S,
   g) comparer $Z(i)/2^{Bt}$ à N, bit à bit, dans le but de déterminer la valeur actualisée S(i) de l'itération suivante, de la manière décrite ci-dessus, cette comparaison se faisant en soustrayant bit à bit $Z(i)/2^{Bt}$ et N dans un circuit de soustraction série (29), N ayant été retardé de Bt cycles supplémentaires,

   E4: à la $m^{ième}$ itération, ignorer le mot le moins significatif de Z(m) et entrer les mots restants, c'est à dire $Z(m)/2^{Bt}$, dans le deuxième registre (10) contenant B,
   E5: sortie du résultat stocké dans le deuxième registre (10) contenant B à la dernière itération, en soustrayant éventuellement N si nécessaire.

8. Procédé selon la revendication 7 caractérisé en ce que les étapes E1 et E2 effectuent les chargements simultanément.

9. Procédé selon l'une des revendications 7 ou 8, caractérisé en ce que l'on décale m * Bt bits du cinquième registre (40) contenant A, et en ce que l'on charge Bt bits correspondant à un mot $A_i$ de A dans un premier registre (16) de Bt bits pendant ledit décalage de m * Bt bits.

10. Procédé d'exponentiation modulaire $A^C \bmod N$, utilisant le procédé de mise en oeuvre de l'opération $P_{field}(A,B)_N$ définie dans l'une des revendications 7 à 9, C étant codé sur c bits et C ayant son bit de poids fort égal à 1, caractérisé en ce que le procédé effectue les étapes dans l'ordre suivant:

- réalisation de l'étape E1,
- calcul d'un paramètre de correction d'erreur H $= 2^{2*m*Bt} \bmod N,$
- réalisation de l'étape E2 en prenant le paramètre de correction H comme valeur pour le multiplieur B,
- réalisation des étapes E3 et E4 avec chargement simultanément du résultat dans les deuxième et cinquième registres (10 et 40), résultat noté A' qui est égal à $(A * 2^{m*Bt}) \bmod N,$
- réalisation d'une boucle indexée par un indice J, J variant de c-2 à 0:

> B1: réalisation d'une étape E3 en utilisant le contenu du deuxième registre (10) à la place du cinquième registre (40), cette étape s'effectuant en chargeant, avant la première itération, les Bt premiers bits du deuxième registre (10) dans le premier registre (16) en effectuant un décalage de m * Bt bits de ce deuxième registre (10), la sortie de ce deuxième registre (10) étant bouclée sur son entrée, et pendant les itérations suivantes, en chargeant les Bt bits suivant de H dans le premier registre (16) au cours de l'itération, le résultat étant stocké dans le deuxième registre (10),
> B2: si le bit de C de poids $2^J$ est égal à un, alors on effectue l'étape E3, A' étant déjà présent dans le cinquième registre (40), et B étant déjà présent dans le deuxième registre (10), réalisation d'une étape E4,

- chargement d'une donnée ayant pour valeur "1", codée sur m * Bt bits, dans le cinquième registre (40),
- réalisation d'une étape E3, "1" étant dans le cinquième registre (40), et B étant dans le deuxième registre (10), réalisation d'une étape E4,
- réalisation d'une étape E5.

**Patentansprüche**

1. Vorrichtung in einer integrierten Schaltung, die die Modulrechenoperation $P_{FELD}(A,B)_N$, nach der Methode von Montgomery, ermöglicht, durch die Verwendung einer Zerlegung in Wörter von Bt Bits zur Ausführung der unterschiedlichen Berechnungen, wobei diese aufweist:

- ein erstes Register mit Bt Bits (16) zur Speicherung von Bt Bits von A mit einem seriellen Eingang und einem parallelen Ausgang,
- ein zweites (10), ein drittes (12) und ein viertes (11) Schieberegister mit m * Bt Bits, wobei m eine ganze Zahl größer 1 ist und einen seriellen Eingang und einen seriellen Ausgang aufweist, wobei die Register (10 bis 12) jeweils B, N und das Ergebnis aufweisen,

- an diese vier Register gekoppelte Rechenvorrichtungen (19, 20, 28, 30, 31), die die Berechnung $P_{FELD}(A,B)_N$ ermöglichen

> dadurch gekennzeichnet, daß
> ein fünftes Schieberegister (40) mit m * Bt Bits zur Speicherung von m * Bt Bits von A hinzugefügt wird, wobei ein serieller Eingang dieses fünften Registers (40) an einem Eingang und ein serieller Ausgang dieses fünften Registers (40) der Vorrichtung mit dem Eingang des ersten Registers (16) verbunden ist, wobei das fünfte Register auf einmal geladen wird.

2. Vorrichtung nach Anspruch 1, dadurch gekennzeichnet, daß das fünfte Register (40) eine variable Größe mit einem Vielfachen von Bt hat.

3. Vorrichtung nach Anspruch 2, dadurch gekennzeichnet, daß das fünfte Register n Unterregister (42, 43, 44) und n-1 Multiplexer (45, 46) mit zwei Eingängen aufweist.

4. Vorrichtung nach Anspruch 3, dadurch gekennzeichnet, daß der Eingang eines ersten Unterregisters (42) der Eingang des fünften Registers (40) ist, der Ausgang eines letzten Unterregisters (44) der Ausgang des fünften Registers (40) ist, ein erster Eingang des Multiplexers (45, 46) mit zwei Eingängen an den Ausgang eines der Unterregister (42, 43) angeschlossen ist, das nicht das letzte ist, wobei ein Ausgang des Multiplexers (45, 46) mit zwei Eingängen an den Eingang eines der Unterregister (43, 44) angeschlossen ist, das nicht das erste ist und wobei alle zweiten Eingänge der Multiplexer (45, 46) mit zwei Eingängen an die Eingänge des fünften Registers (40) angeschlossen sind.

5. Vorrichtung nach einem der Ansprüche 1 bis 4, dadurch gekennzeichnet, daß der Eingang des fünften Registers (40) an den Ausgang eines Multiplexers mit drei Eingängen (41) angeschlossen ist.

6. Vorrichtung nach Anspruch 5, dadurch gekennzeichnet, daß ein erster Eingang des Multiplexers mit drei Eingängen (41) an den Ausgang des fünften Registers (40), ein zweiter Eingang des Multiplexers mit drei Eingängen (41) an einen Eingang der Vorrichtung angeschlossen ist, wobei ein dritter Eingang die Aufnahme von Daten vom Rest der Vorrichtung (31) gewährleistet.

7. Verfahren zur Durchführung einer Moduloperation $P_{FELD}(A,B)_N$ nach der Methode von Montgomery, dadurch gekennzeichnet, daß das Verfahren folgende Schritte aufweist:

E1: Berechnen eines auf Bt Bits kodierten Parameters $J_0$, mit $J_0 = -N_0^{-1} \bmod 2^{Bt}$, wobei $N_0$ ein Wort mit der niedrigsten Gewichtung eines Moduls N ist und Laden von $J_0$ in ein Rechenregister (17) mit Bt Bits,

E2: Laden eines Multiplikanden A, eines Multiplikators B und eines Moduls N in jeweils ein fünftes, ein zweites und ein drittes Register (40, 10, 12) mit n Bits, mit $n = m * Bt$, und Initialisieren auf Null eines vierten Registers (11) mit n Bits, wobei der Inhalt dieses Registers S genannt wird, wobei S eine variable binäre auf n Bits kodierte Größe ist,

E3: Durchführen einer mit dem Index i bezeichneten Schleife, mit i gleich 1 bis m, wobei jede $i^{te}$ Iteration folgende Operationen aufweist:

    a) Verschieben des fünften Registers (40), welches A beinhaltet, um Bt Bits nach rechts, wobei das Laden dieser Bt Bits einem Wort $A_i$ von A in einem ersten Register (16) von Bt Bits entspricht,

    b) Übertragen des $i^{ten}$ Wortes $A_{i-1}$ des Multiplikanden A des ersten Registers an ein Speicherregister (21),

    c) Erzeugen eines Wertes $X(i) = S(i-1) + B * A_{i-1}$, wobei $S(0) = 0$ und $S(i-1)$ der aktualisierte Wert von S ist,

    d) Erzeugen eines Wertes $Y_0(i) = X_0(i) * J_0 \bmod 2^{Bt}$,

    e) Berechnen eines Wertes $Z(i) = X(i) + Y_0(i) + N$,

    f) Nichtberücksichtigen des Wortes mit der niedrigsten Gewichtung von $Z(i)$ und Speichern der übrigen Worte d.h. $Z(i)/2^{Bt}$ im vierten Register (11), das S enthält,

    g) bitweises Vergleichen von $Z(i)/2^{Bt}$ mit N mit dem Ziel, den aktualisierten Wert $S(i)$ der folgenden Iteration auf die oben beschriebene Weise zu bestimmen, wobei der Vergleich durch die bitweise Subtraktion von $Z(i)/2^{Bt}$ und N in einer seriellen Subtraktionsschaltung (29) erfolgt, wobei N um Bt zusätzliche Takte verzögert wurde,

E4: Nichtberücksichtigen des Wortes mit der niedrigsten Gewichtung bei der $m^{ten}$ Iteration und Speichern der übrigen Worte, d.h. $Z(m)/2^{Bt}$ in einem zweiten Register (10), welches B enthält,

E5: Ausgabe des im zweiten Register (10), welches B enthält, gespeicherten Ergebnisses bei der letzten Iteration und, wenn notwendig, Subtraktion von N.

**8.** Verfahren nach Anspruch 7, dadurch gekennzeichnet, daß die Schritte E1 und E2 das Laden gleichzeitig ausführen.

**9.** Verfahren nach einem der Ansprüche 7 oder 8, dadurch gekennzeichnet, daß das fünfte Register (40), das A enthält, um m * Bt Bits verschoben wird und dadurch, daß Bt Bits, die einem Wort $A_i$ von A entsprechen, in einem ersten Register (16) von Bt Bits während der Verschiebung um m * Bt Bits geladen werden.

**10.** Modul-Exponenzierverfahren $A^c \bmod N$, das das Verfahren zur Durchführung der Operation $P_{FELD}(A,B)_N$ verwendet, das in einem der Ansprüche 7 bis 9 definiert wurde, wobei C auf c Bits kodiert wurde und bei C das Bit mit hoher Gewichtung gleich 1 ist, dadurch gekennzeichnet, daß das Verfahren die Schritte in der folgenden Abfolge ausführt:

- Ausführen des Schrittes E1,
- Berechnen eines Fehlerkorrekturparameters H $= 2^{2 \cdot m \cdot Bt} \bmod N$,
- Ausführen des Schrittes E2, indem der Korrekturparameter H als Wert für den Multiplikator B verwendet wird,
- Durchführen der Schritte E3 und E4 mit gleichzeitigem Laden des Ergebnisses in die zweiten und fünften Registern (10 und 40), wobei das Ergebnis A' genannt wird und gleich $(A * 2^{m \cdot Bt}) \bmod N$ ist,
- Ausführen einer mit dem Index J bezeichneten Schleife, wobei J von c-2 bis 0 variiert:

    B1: Ausführen eines Schrittes E3 unter der Verwendung des Inhalts des zweiten Registers (10) anstelle des fünften Registers (40), wobei dieser Schritt ausgeführt wird, indem vor der ersten Iteration die Bt ersten Bits des zweiten Registers (10) in das erste Register (16) geladen werden, indem m * Bt Bits des zweiten Registers verschoben werden, wobei der Ausgang des zweiten Registers (10) an seinen Eingang zur Schleife geschaltet wird und während der folgenden Iterationen die folgenden Bt Bits von H in das erste Register (16) im Laufe der Iteration lädt, wobei das Ergebnis in dem zweiten Register (10) gespeichert wird,

    B2: wenn das Bit von C mit der Gewichtung $2^J$ gleich 1 ist, wird der Schritt E3 ausgeführt, wobei A' schon in dem fünften Register (40) und B schon im zweiten Register (10) vorliegt und Ausführen eines Schrittes E4,

- Laden einer auf m * Bt Bits kodierten Größe in das fünfte Register (40), die den Wert "1" aufweist,

- Ausführen eines Schrittes E3, wobei "1" in dem fünften Register (40) und B in dem zweiten Register (10) liegt und Ausführen eines Schrittes E4,

- Ausführen eines Schrittes E5.

## Claims

1. Integrated circuit device for calculating modular operations of the $P_{field}(A, B)_N$ type defined in the Montgomery method, using a division into words of Bt bits in order to perform the different calculations, having:

   - a first register of Bt bits (16), for containing Bt bits of A, having a serial input and a parallel output,

   - a second (10), a third (12) and a fourth (11) shift register of m * Bt bits, m being an integer greater than 1, having a serial input and a serial output, these registers (10 to 12) containing B, N and the result, respectively,

   - calculation means (19, 20, 28, 30, 31) coupled to these four registers allowing the said $P_{field}(A, B)_N$ calculation,

   characterised in that a fifth shift register (40) of m * Bt bits is added, for containing m * Bt bits of A, a serial input of this fifth register (40) being connected to an input terminal and a serial output of this fifth register (40) of the said device being connected to the input of the first register (16), the said fifth register being loaded on a single occasion.

2. Device according to Claim 1, characterised in that the fifth register (40) is of a variable size which is a multiple of Bt.

3. Device according to Claim 2, characterised in that the fifth register (40) has n sub-registers (42, 43, 44) and n-1 two-input multiplexers (45, 46).

4. Device according to Claim 3, characterised in that the input of a first sub-register (42) is the input of the fifth register (40), the output of a last sub-register (44) being the output of the fifth register (40), a first input of a two-input multiplexer (45, 46) being connected to the output of one of the sub-registers (42, 43) which is not the last, an output of a two-input multiplexer (45, 46) being connected to the input of one of the sub-registers (43, 44) which is not the first, and all the second inputs of the two-input multiplexers (45, 46) being connected to the input of the fifth register (40).

5. Device according to one of Claims 1 to 4, characterised in that the input of the fifth register (40) is connected to the output of a three-input multiplexer (41).

6. Device according to Claim 5, characterised in that a first input of the three-input multiplexer (41) is connected to the output of the fifth register (40), a second input of the three-input multiplexer (41) being connected to an input terminal of the device, a third input making it possible to receive data from the rest of the device (31).

7. Method of implementing a modular $P_{field}(A,B)_N$ operation according to the Montgomery method, characterised in that the method includes the following steps:

   E1: calculating a parameter $J_0$ coded in Bt bits, with $J_0 = - N_0^{-1}$; mod $2^{Bt}$, $N_0$ being a least significant word of a modulo N, and loading $J_0$ into a calculation register (17) of Bt bits,

   E2: loading a multiplicand A, a multiplier B and a modulo N into fifth, second and third respective n-bit registers (40, 10, 12), with n = m * Bt, and initialising a fourth n-bit register (11) to zero, the content of this register being denoted S, with S a variable binary data item coded in n bits,

   E3: implementing a loop (indexed by an index i, with i varying from 1 to m, each $i^{th}$ iteration comprising the following operations:

      a) shifting, to the right, Bt bits of the fifth register (40) containing A, loading these Bt bits corresponding to a word $A_i$ of A into a first register (16) of Bt bits,

      b) transferring the $i^{th}$ word $A_{i-1}$ of the multiplicand A from the first register (16) to a storage register (21),

      c) producing a value $X(i) = S(i-1) + B * A_{i-1}$ with $S(0) = 0$ and $S(i-1)$ the so-called updated value of S,

      d) producing a value $Y_0(i) = X_0(i) * J_0$ mod $2^{Bt}$,

      e) calculating a value $Z(i) = X(i) + Y_0(i) * N$,

      f) not taking into account the least significant word of Z(i) and storing the remaining words, that is to say $Z(i)/2^{Bt}$, in the fourth register (11) containing S,

g) comparing $Z(i)/2^{Bt}$ with N, bit by bit, for the purpose of determining the updated value S(i) of the following iteration, in the manner described above, this comparison being effected by subtracting, bit by bit, $Z(i)/2^{Bt}$ and N in a serial subtraction circuit (29), N having been delayed by Bt additional cycles,

E4: at the $m^{th}$ iteration, ignoring the least significant word of Z(m) and entering the remaining words, that is to say $Z(m)/2^{Bt}$, into the second register (10) containing B,

E5: outputting the result stored in the second register (10) containing B at the last iteration, possibly subtracting N if necessary.

8. Method according to Claim 7, characterised in that steps EI and E2 perform the loadings simultaneously.

9. Method according to one of Claims 7 or 8, characterised in that m * Bt bits of the fifth register (40) containing A are shifted, and in that Bt bits corresponding to a word $A_i$ of A are loaded into a first register (16) of Bt bits during the said shifting of m * Bt bits.

10. Method of modular exponentiation $A^c$ mod N, using the method of implementing the $P_{field}(A,B)_N$ operation defined in one of Claims 7 to 9, C being coded in c bits and C having its most significant bit equal to 1, characterised in that the method performs the steps in the following order:

- performing step E1,

- calculating an error correction parameter $H = 2^{2*m*Bt}$ mod N,

- performing step E2, taking the correction parameter H as the value for the multiplier B,

- performing steps E3 and E4 with simultaneous loading of the result into the second and fifth registers (10 and 40), the result denoted A', which is equal to $(A * 2^{m*Bt})$ mod N,

- performing a loop indexed by an index J, J varying from c-2 to 0;

  B1: performing a step E3 using the content of the second register (10) in place of the fifth register (40), this step being effected by loading, before the first iteration, the first Bt bits of the second register (10) into the first register (16) whilst performing a shift of m * Bt bits of this second register (10), the output of this second register (10) being looped to its input, and during the following iterations, loading the following Bt bits of H into the first register (16) during the iteration, the result being stored in the second register (10),

  B2: if the bit of C of weight $2^J$ is equal to one, then step E3 is performed, A' being already present in the fifth register (40), and B being already present in the second register (10), and performing a step E4,

- loading a data item having the value "1", coded in m * Bt bits, into the fifth register (40),

- performing a step E3, "1" being in the fifth register (40), and B being in the second register (10), and performing a step E4,

- performing a step E5.

FIG_1

A*BmodN

B

N

FIG_2

EP 0 784 262 B1

# FIG_3